# EUROPÄISCHE PATENTSCHRIFT

(11) **EP 1 922 533 B1**
(45) Veröffentlichungstag und Bekanntmachung des Hinweises auf die Patenterteilung: **09.03.2011**
(21) Anmeldenummer: 05795048.7
(22) Anmeldetag: 18.10.2005
(51) Int. Cl.: G01L 1/22, G01L 5/10

(54) **MODULAR AUFGEBAUTE MESSACHSE**
MODULAR CONSTRUCTION MEASUREMENT AXLE
AXE DE MESURE DE CONCEPTION MODULAIRE

(30) Priorität: 12.09.2005 DE 102005045024
(43) Veröffentlichungstag der Anmeldung: 21.05.2008
(73) Patentinhaber: EBM Brosa Messgeräte GmbH & Co.KG, 88069 Tettnang (DE)
(72) Erfinder: FUTTERER, Bernd, 88214 Ravensburg (DE)
(74) Vertreter: Wegener, Markus
(86) Internationale Anmeldenummer: PCT/EP2005/011167
(87) Internationale Veröffentlichungsnummer: WO 2007/031111

(56) Entgegenhaltungen:
- EP-A- 0 175 917
- WO-A-2004/063691
- DE-A1- 3 340 438
- DE-A1- 10 245 768
- DE-B3- 10 302 349
- GB-A- 2 129 949
- US-A- 4 516 646
- US-A1- 2002 020 213
- US-A1- 2002 069 708

## Beschreibung

Die vorliegende Erfindung betrifft ein modulares Kraftaufnehmersystem zum Messen von Kräften, die im Wesentlichen quer auf eine Achse, insbesondere eine Messachse, wirken, mit: einem Achskörper, der sich entlang einer Längsachse erstreckt, wobei der Achskörper einen Krafteinleitungsabschnitt, mindestens einen Lagerabschnitt und mindestens einen Verformungsabschnitt aufweist, und einer Messzelle, die einen Messzellenkörper umfasst.

Ein derartiger Kraftaufnehmer ist aus der DE 103 03 349 bekannt.

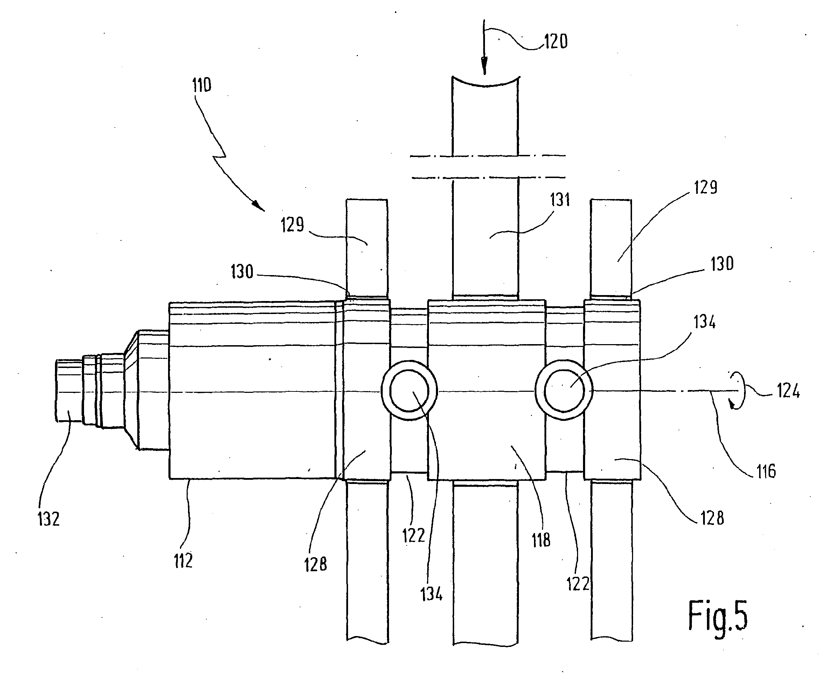

Ein solcher Kraftaufnehmer ist exemplarisch in Figur 5 dargestellte und mit 110 bezeichnet. Der Kraftaufnehmer 110 stellt eine sogenannte Messachse dar. Die Messachse 110 erstreckt sich längs einer Längsachse 116. Sie ist ferner in drei Abschnitte unterteilt. Ein erster Abschnitt zum Einleiten einer Kraft 120 quer zur Längsachse 116 ist mit 118 bezeichnet. An den Krafteinleitungsabschnitt 118 schließt sich in axialer Richtung jeweils ein Verformungsabschnitt 122 an. Die Verformungsabschnitte 122 weisen einen geringeren Durchmesser als der Krafteinleitungsabschnitt 118 auf. An die Verformungsabschnitte 122 wiederum schließen sich sogenannte Lagerabschnitte 128 an, die von Halteschenkeln 129 mittels Bohrungen 130 gehalten werden. Der Krafteinleitungsabschnitt 118 trägt beispielsweise eine Seilrolle 131, wie sie beispielsweise bei Kränen eingesetzt wird. Über die Seilrolle 131 wird die (Gewichts-)Kraft auf den Krafteinleitungsabschnitt 118 übertragen.

Bei dem in Figur 5 gezeigten Kraftaufnehmersystem 110 sind die Verformungsabschnitte 122 aus dem Vollmaterial des Achskörpers 112 gedreht und gefräst. Bei Einwirkung einer Kraft 120 kommt es in diesen Bereichen zu den größten Verformungen (Biegung/ Stauchung/ Scherung). Diese Verformungen werden wiederum mittels Messzellen 134 in elektrische Signale umgewandelt. Dazu ist eine Messzelle, wie zum Beispiel ein Dehnungsmessstreifen (DMS) vorgesehen. Die Messzelle 134 sitzt in einer Vertiefung, die sich in radialer Richtung, das heißt senkrecht zur Zeichnungsebene der Figur 5, in den Achskörper 112 erstreckt. Die Verdrahtung von (hier nicht dargestellten) DMS erfolgt durch hier nicht dargestellte Bohrungen, die sich im Inneren des Achskörpers 112 befinden, so dass die Signale an einem axialen Ende des Achskörpers 112 über einen Anschluss 132 abgegriffen werden können.

Die für das Funktionieren des Scher- bzw. Biegebalkenprinzips erforderlichen Aussparungen im Bereich der Verformungsabschnitte 122, wo die Messzellen 134 angeordnet sind, sind aufgrund des variierenden Radius und variierenden Bohrungstiefen schwierig herzustellen. Die radialen Vertiefungen für die Messzellen 134 müssen in einem getrennten Arbeitsgang radial in den Achskörper 112 gefräst werden. Gleiches gilt für die nicht dargestellten Bohrungen, um die Messzellen 134 zu verdrahten.

Die Verdrahtung der Kraftmesszellen 134 selbst ist aufwändig, da die Kabel durch Verdrahtungsbohrungen geringen Durchmessers hindurchgeführt werden müssen, um sie z.B. mit dem Anschluss 132 zu verbinden.

Ein weiteres Problem stellt die Versiegelung bzw. der Verschluss der Messzellen 134 gegenüber der Außenwelt dar. Grundsätzlich sind die Messzellen 134 äußeren Einflüssen, wie zum Beispiel Stößen oder wechselndem Wetter, ausgesetzt. Ist eine Messzelle 134 nicht ausreichend gegenüber der Außenwelt abgedichtet, so kann Wasser in die Messzelle 134 eindringen und den Betrieb derselben stören oder diese sogar zerstören.

Ein anderes Problem stellt die Anbringung der DMS in den radialen Bohrungen dar. Die radialen Vertiefungen weisen in der Regel einen relativ kleinen Durchmesser auf bzw. sind relativ tief, so dass sich das Verkleben von Folien-DMS aufgrund des geringen zur Verfügung stehenden Raumes problematisch und aufwändig gestaltet.

Die WO 2004/063691, die auf die Anmelderin der hier vorliegenden Erfindung zurückgeht, offenbart einen Kraftaufnehmer zum Messen von Achskräften. Ein solcher Kraftaufnehmer zum Messen von Achskräften, die im Wesentlichen quer auf eine Achse wirken, insbesondere eine Messachse, weist einen sich längs erstreckenden Achskörper auf, der in einem axial mittleren Bereich eine Krafteinleitzone und axial außerhalb der Krafteinleitzone zumindest eine Lagerzone zum Lagern des Kraftaufnehmers in eine Aufnahme und axial außerhalb der Krafteinleitzone zumindest eine Kraftmesszone zum Messen der Achskräfte aufweist. Der Achskörper ist außerhalb der Krafteinleitzone zumindest im Bereich der zumindest einen Lagerzone von einer Hülse umgeben, deren der Krafteinleitungszone zugewandtes Ende mit dem Achskörper nicht verbunden, sondern frei ist.

Die US 2002/0020213 A1 betrifft eine Lastzelle zum Aufnehmen von Kräften, die als direkter Ersatz für existierende Ankerstifte gedacht ist und die als Lasthalteglied und Vorrichtung zum Messen und Diagnostizieren in einem Bremssystem verwendet wird. Die Arbeitsabmessungen der Zelle und die ausgetauschten Teile sind die gleichen, außer dass die Zelle kurze Bereiche mit verringertem Durchmesser aufweist, so dass Dehnungen in diesen Bereichen konzentriert werden. Elektrische Dehnungsmessstreifen sind innerhalb dieser Bereiche mit Verbindungen zu einer äußeren Mess- und Überwachungseinrichtung positioniert. Die Anordnung und Orientierung der Streifen in dem Konzentrationsbereich ermöglicht eine Messung der angelegten Bremslast sowohl hinsichtlich einer Größe als auch einer Richtung.

Die DE 102 45 768 A1 offenbart einen Kraftaufnehmer zum Messen von Achskräften, die im Wesentlichen quer auf eine Achse wirken, insbesondere eine Messachse, die einen sich längs erstreckenden Achskern und eine sich über im Wesentlichen die Länge des Achskerns erstreckende, den Achskern ummantelnde Hülle aufweist, die fest mit dem Kern verbunden ist. Die Hülle weist ferner zumindest zwei voneinander beabstandete Auflagezonen auf, und der Achskern weist im Bereich zwischen den Auflagezonen zumindest eine Kraftmesszone zum Messen der Achskräfte auf, in der zumindest eine Kraftmesseinrichtung angeordnet ist. Die Hülle weist im Bereich zwischen den Auflagezonen zumindest eine Biegezone auf, in der die Hülle in Richtung im Wesentlichen quer zur Längsrichtung des Achskerns biegsam ist.

Die US 4,516,646 offenbart eine Lastzelle basierend auf dem Scherkraftprinzip mit einem Messkörper in Form eines Balkens, der an äußeren Endbereichen getragen wird und in seinem Mittelbereich belastet wird.

Die EP 0 175 917 offenbart einen Kraftmesser. Ein Bauelement eines Kraftmessers ist in Augen der Schenkel eines Schleppergehäuses gelagert. In eine Längsbohrung des Bauelements ist im Bereich der Lagerung eines Unterlenkers eines Pflugs ein elastisch verformbarer, scheibenartiger Träger ortsfest angeordnet. Auf diesem Träger befinden sich in Richtung der Zugkraft des Unterlenkers und unter 90° zu diesen Dehnungsmessstreifen. Die Durchbiegung des Bauelements und somit die Zugkraft des Unterlenkers des Flugs wird mit Hilfe der Dehnungsmessstreifen auf eine Regeleinrichtung eines Schleppers übertragen. Der Kraftmesser baut einfach und kompakt und eignet sich für besondere Anwendungsfälle.

Es ist daher eine Aufgabe der vorliegenden Erfindung, ein verbessertes Kraftaufnehmersystem bereitzustellen, welches deutlich einfacher und kostengünstiger herzustellen ist. Insbesondere soll die Messzelle gegenüber äußeren Einflüssen geschützt sein. Sollten Folien-DMS verwendet werden, die geklebt werden müssen, so sollen diese einfach in den Kraftaufnehmerkörper einzubauen sein.

Diese Aufgabe wird durch ein modulares Kraftaufnehmersystem der eingangs erwähnten Art gelöst, wobei die Messzelle mit ihrem Messzellenkörper derart in eine axiale Bohrung des Achskörpers einführbar ist, dass die Messzelle im Wesentlichen formschlüssig im Inneren des Achskörpers angeordnet werden kann, wobei die axiale Bohrung einen Abschnitt, der zur Aufnahme der Messzelle bestimmt ist und konisch ausgebildet ist.

Die konische Ausbildung der axialen Bohrung erlaubt, bei einem entsprechend ausgebildeten Messzellenkörper, eine flächige Verbidung zwischen dem Messzellenkörper und dem Achskörper, wenn die Messzelle in die axiale Bohrung eingeführt ist. Je stärker der Messzellenkörper in den Achskörper gepresst wird, desto besser ist die Flächenverbindung und desto besser ist somit die Kraftübertragung vom Achskörper auf die Messzellen. Dies wiederum erhöht die Empfindlichkeit sowie die Zuverlässigkeit des gesamten Kraftmesssystems.

Bei dem Achskörper gemäß der vorliegenden Erfindung sind im Gegensatz zu Achskörpern gemäß dem Stand der Technik keine radialen Bohrungen mehr erforderlich. Stattdessen wird lediglich eine axiale Bohrung vorgesehen, die fertigungstechnisch einfacher als Radialbohrungen herzustellen ist, weil der Achskörper in einer Aufspannung lediglich gedreht wird. Der Messzellenkörper wird anschließend in die axiale Bohrung eingeführt, wobei die Abmessungen der Bohrung und der Messzelle derart gewählt sind, dass sie formschlüssig miteinander verbindbar sind. Die Messzelle befindet sich dann im Inneren des Achskörpers und ist gegenüber äußeren Einflüssen geschützt. Ferner kann die Messzelle bereits außerhalb der Messzelle präpariert werden. Die Messzelle sowie deren Verdrahtung kann außerhalb des Achskörpers montiert bzw. vorbereitet werden. Anschließend wird die bereits verdrahtete Messzelle in den Achskörper eingeführt, was eine erhebliche Vereinfachung darstellt.

Außerdem ist es bevorzugt, wenn der Achskörper den Messzellenkörper im eingeführten Zustand relativ zur Längsachse in umfangsrichtung umgibt.

Da die zu messende Kraft in der Regel im Wesentlichen senkrecht zur Längsachse des Achskörpers wirkt, können Verformungen am besten auf die Messzelle übertragen werden, wenn diese vorzugsweise entlang ihrer gesamten Längserstreckung in Umfangsrichtung vollständig vom Achskörper umgeben wird. Die Kraftübertragung erfolgt dann nahezu flächig, was die Zuverlässigkeit der Sensorik, die in der Regel auf dem Scher- bzw. Biegebalkenprinzip beruht, erhöht.

Ferner hat es sich als vorteilhaft herausgestellt, wenn die axiale Bohrung konzentrisch zur Längsachse angeordnet ist.

Im Falle einer konzentrischen Bohrung kann für die Messzelle eine Kraftmesssensorik verwendet werden, die in der Lage ist, eine Richtung der Krafteinwirkung zu bestimmen. Da sich die axiale Bohrung in der Mitte des Achskörpers befindet, herrscht die für eine richtungsabhängige Kraftmessung erforderliche Symmetrie.

Gemäß einer bevorzugten Ausführungsform liegt die axiale Bohrung im Bereich des Verformungsabschnitts.

Wie bereits oben erwähnt, ist die mechanische Verformung im Bereich des Verformungsabschnitts am größten. Wird die Messzelle genau in diesem Bereich des Achskörpers angeordnet, so erhöht sich die Empfindlichkeit der Kraftmesssensorik.

Ferner ist es bevorzugt, wenn die axiale Bohrung durch den Achskörper hindurch verläuft.

Bei dieser Ausgestaltung ist es möglich, die Messzelle von beiden Seiten des Achskörpers einzuführen. Ferner ermöglicht dies die Einführung einer weiteren Messzelle, ohne dass die erste Messzelle zum Ein- oder Ausbau der weiteren Messzelle ein- und ausgebaut werden muss.

Vorzugsweise weist die axiale Bohrung axiale Abschnitte mit unterschiedlichen Durchmessern auf.

Im Falle einer durchgehenden axialen Bohrung kann die axiale Bohrung in einem mittleren Bereich relativ zur Längsachse des Achskörpers einen geringeren Durchmesser als die Messzelle aufweisen. Auf diese weise wird gewährleistet, dass die Messzelle nicht in den mittleren Bereich der axialen Bohrung einführbar ist. Im mittleren Bereich der axialen Bohrung finden in der Regel nur geringe mechanische Verformungen statt, so dass der mittlere Bereich des Achskörpers für die Messung von Kräften, die auf dem Biegebalkenprinzip beruht, relativ uninteressant ist.

Außerdem ist es von Vorteil, wenn die axiale Bohrung einen weiteren mit einem Gewinde versehenen Abschnitt aufweist, um in einem zustand, wenn die Messzelle in den konischen Abschnitt eingeführt ist, einen mit einem entsprechenden Gewinde versehenen Sperrkörper von außen derart dort einschrauben zu können, dass die Messzelle im Wesentlich flächenbündig im konischen Abschnitt verklemmt ist.

Mit Hilfe des Sperrkörpers lässt sich die Messzelle in die axiale Bohrung pressen. Der Sperrkörper dient ferner als Anschlag für die Messzelle. Er verhindert, dass sich die Messzelle im Laufe der Zeit durch eine axiale Bewegung aus dem Konussitz herausarbeitet.

Vorzugsweise ist die Messzelle hantelförmig ausgebildet. Insbesondere weist der hantelförmige Messzellenkörper zwei Hantelköpfe und ein Brückenelement auf, wobei das Brückenelement die Hantelköpfe in axialer Richtung verbindet.

Die Hantelform ist ideal für das Biegebalken- oder Scherprinzip. Das Brückenelement lässt sich einfach verbiegen bzw. scheren und dient insbesondere deswegen auch als Anbringungsort für die Kraftmesssensorik. Bildhaft gesprochen stellt die hantelförmige Messzelle selbst eine Messachse dar, die wiederum in eine größere äußere Messachse axial einführbar ist.

Als vorteilhaft hat sich herausgestellt, wenn der Messzellenkörper einstückig ausgebildet ist.

Bei einstückiger Ausbildung des Messzellenkörpers lässt sich das Brückenelement zwischen den Hantelköpfen auf einfache Weise herstellen. Die Hantelköpfe können beispielsweise zylinderförmig, und bevorzugt konisch, ausgebildet sein, so dass der Messzellenkörper selbst aus Rundmaterial herstellbar ist. Rundmaterial ist kostengünstig und einfach lagerbar.

Alternativ können die Hantelköpfe und das Brückenelement modular ausgebildet sein. Insbesondere weisen dann die sich gegenüberliegenden Stirnflächen der Hantelköpfe jeweils eine Aussparung zur formschlüssigen Aufnahme des Brückenelements auf.

Ist die Messzelle selbst modular aufgebaut, kann der gesamte Kraftaufnehmer aus einem beliebig variierbaren Baukastensystem gewählt werden.

Je nach Anforderung (zum Beispiel unterschiedliche Messbereiche) können unterschiedlich stark ausgebildete Komponenten verwendet werden. Der modulartige Aufbau der Messzelle selbst ist insbesondere dann vorteilhaft, wenn die Kraftmesssensorik mittels Sputter-Technik auf das Brückenelement aufgebracht wird. Im zusammengebauten Zustand der Hanteln lässt sich die Sputter-Technik nur schwer auf das Brückenelement anwenden, was sich schlimmstenfalls in einer nicht ausreichend homogenen Oberflächenbeschaffenheit des Brückenelements bzw. der mittels der Sputter-Technik herzustellenden Sensorik äußert.

Insbesondere wenn die Sputter-Technik zur Herstellung der Kraftmesssensorik verwendet wird, das heißt wenn Dehnungsmessleitungen atomarer Größenordnung gewünscht sind, werden bevorzugt Plättchen als Brückenelement verwendet. Die Plättchen lassen sich auf einfache Weise in entsprechende Aussparungen in den Stirnseiten der Handelköpfe einführen. Das Plättchen selbst weist eine ausreichend große Fläche auf, um die Sputter-Technik zufriedenstellend anwenden zu können.

Gemäß einer weiteren bevorzugten Ausführungsform weist das Brückenelement einen kreuzförmigen Querschnitt auf.

Mit einem kreuzförmigen Querschnitt lassen sich mehrere Kraftmesssensoren auf den jeweiligen Flächen des Brückenelements anordnen. Flächen, die in ein und derselben Ebene liegen, können zur Bestimmung einer Kraftkomponente in einer ersten Richtung verwendet werden. Die Sensoren, die auf der anderen Ebene angeordnet sind, können zur Bestimmung einer zweiten Kraftkomponente verwendet werden, die um 90° zur ersten Kraftkomponente gedreht orientiert ist.

Weiterhin ist es von Vorteil, wenn das Brückenelement vierkantförmig und innen hohl ausgebildet ist. Mit einem vierkantförmigen Brückenelement lassen sich sowohl (richtungsabhängig) Biegekräfte als auch Scherkräfte hervorragend messen.

Für die Messung von Torsionskräften ist insbesondere die Verwendung eines zylinderförmigen Brückenelements vorteilhaft. Mit Hilfe eines Massivzylinders lassen sich hervorragend Verwindungskräfte von einer Stirnfläche her zur anderen Stirnfläche hin übertragen. In diesem Fall wird die Kraftmesssensorik an der Außenseite des Zylinders angebracht, um die mechanische Verformung des zylinderförmigen Brückenabschnitts gut detektieren zu können. Je größer der Radius des Brückenelements ist, desto geringer ist die Verwindungssteifigkeit, d.h. das Drehmoment nimmt zu.

Vorzugsweise ist die Messzelle (z.B. DMS) im Bereich der Mitte in axialer Richtung angeordnet, so dass auch bei Einwirkung einer Torsionskraft gar kein bzw. nur ein geringes Drehmoment übertragen wird.

Gemäß einer weiteren vorteilhaften Ausgestaltung sind zwei Messzellen vorgesehen, von denen jede in eine axiale Bohrung einführbar ist.

Durch das Vorsehen von zwei Messzellen ist man richtungsunabhängig, insofern dass die Messrichtung variabel durch die Positionierung eingestellt werden kann. Es ist dadurch auch möglich Messachsen in X- und Y-Messrichtung herzustellen.

Vorzugsweise sind die zwei Messzellen in zwei axiale Bohrungen einführbar, die sich von den Stirnflächen des Achskörpers in Richtung des Achainneren konzentrisch zur Längsachse erstrecken.

Alternativ können an ein und derselben Stirnfläche zwei koaxiale Bohrungen vorgesehen werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine perspektivische Ansicht einer erfindungs- gemäßen Messachse, die in Längsrichtung ge- schnitten dargestellt ist;
- Figuren 2A-C: verschiedene Darstellungen einer Messzelle gemäß der vorliegenden Erfindung;
- Figuren 3A-C: verschiedene Ausgestaltungen eines Brücken- elements einer Messzelle gemäß der vorliegenden Erfindung;
- Figur 4: eine Schnittansicht eines Achskörpers mit ko- nisch ausgestalteter axialer Bohrung und koni- scher Messzelle gemäß der vorliegenden Erfin- dung; und
- Figur 5: eine perspektivische Ansicht einer Messachse gemäß dem Stand der Technik.

In den nachfolgenden Figuren werden gleiche Elemente mit gleichen Bezugszeichen bezeichnet werden.

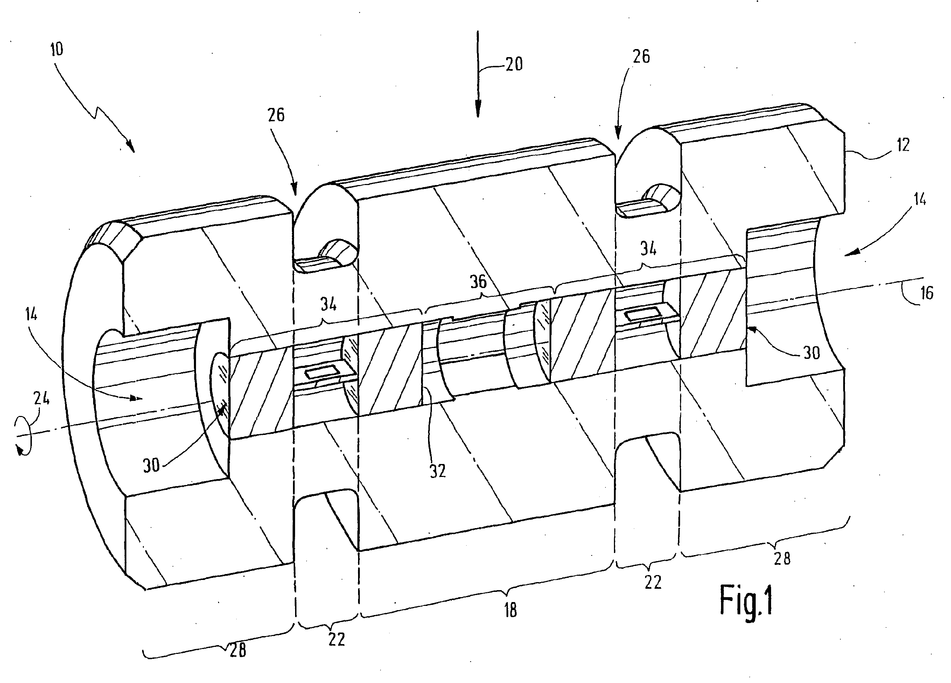

In Figur 1 ist eine Messachse bzw. ein Kraftaufnehmersystem 10 in perspektivischer Ansicht dargestellt.

Die Messachse 10 weist einen Messachsenkörper 12 mit einer konzentrischen axialen Bohrung 14 auf. Die axiale Bohrung 14 erstreckt sich entlang einer Längsachse 16.

Der Messachsenkörper 12 umfasst des Weiteren einen Krafteinleitungsabschnitt 18, auf den gewöhnlicherweise eine mit einem Pfeil 20 symbolisierte Kraft im Wesentlichen senkrecht zur Längsachse 16 auf die Messachse 10 wirkt. An den Krafteinleitungsabschnitt 18 schließen sich Verformungsabschnitte 22 an. Der Achskörper 12 ist dort in umfängliche Richtung 24 weniger stark ausgebildet als im Krafteinleitungsbereich 18. Der Achskörper 12 kann zum Beispiel aus Rundmaterial hergestellt werden, in das rundumlaufende Nuten 25 gefräst oder gedreht werden, um die Verformungsabschnitte 22 auszubilden.

An die Verformungsabschnitte 22 wiederum schließen sich Lagerabschnitte 28 an, die zur Aufnahme in entsprechend ausgebildeten Halteelementen, wie sie exemplarisch in Figur 5 bereits dargestellt sind, geeignet sind.

Es ist festzustellen, dass die Messachse 10 mit jeweils mindestens einem Verformungsabschnitt 22 und mindestens einem Lagerabschnitt 28 ausgebildet ist.

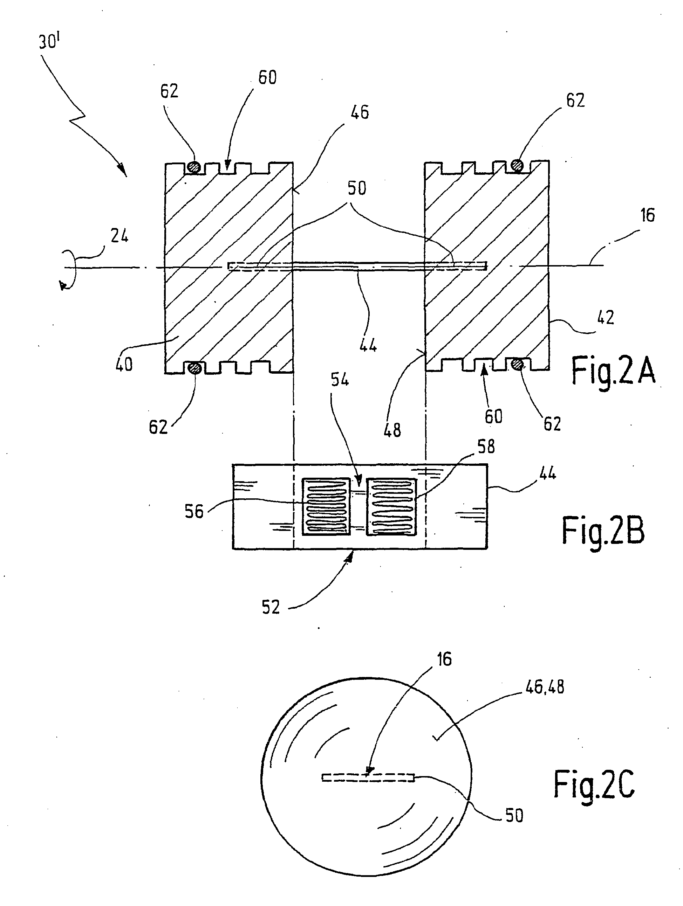

Was die axiale Bohrung 14 betrifft, so kann deren Durchmesser im Lagerabschnitt 28 in Richtung der äußeren Stirnseiten der Messachse 10 stufenartig oder kontinuierlich variieren. Im Bereich der Verformungsabschnitte 22 und des Krafteinleitungsabschnitts 16 weist der Durchmesser üblicherweise einen konstanten Wert auf. Der Durchmesser entspricht dabei im Wesentlichen dem Durchmesser einer Messzelle 30, die einen Messzellenkörper 32 umfasst. Auf die Form des Messzellenkörpers 32 wird in Zusammenhang mit Figuren 2A bis 2C noch detailliert Bezug genommen.

Im Bereich der inneren axialen Bohrung 14 ist diese bei der Ausgestaltung gemäß der Figur 1 in drei Abschnitte unterteilt. Die axiale Bohrung 14 weist zwei Messzellenabschnitte 34 sowie einen Mittelabschnitt 36 auf. Der Durchmesser der Messzellenabschnitte 34 entspricht dabei, wie bereits oben erwähnt, nahezu dem Durchmesser der Messzelle. Der Durchmesser des Mittelabschnitts 36 kann wiederum variieren. Vorzugsweise nimmt der Durchmesser im Mittelabschnitt 36 nochmals ab, so dass sich eine Stufe im Mittelabschnitt 36 ausbildet, die als mechanischer Anschlag für die Messzellen 30 dient.

Bezug nehmend auf Figuren 2A - C ist eine weitere Ausführungsform einer Messzelle 30' gemäß der vorliegenden Erfindung dargestellt. Figur 2A zeigt eine Schnittansicht, ähnlich zu dem in Figur 1 dargestellten Schnitt. Figur 2B zeigt eine Draufsicht auf ein mittleres Element der Messzelle 30'. Figur 2C zeigt eine Vorderansicht einer Stirnseite der Messzelle 30' entlang der Längsachse 16.

In Figur 2A ist in der seitlichen Schnittansicht links ein Hantelkopf 40 und rechts ein Hantelkopf 42 dargestellt. Die beiden Hantelköpfe 40 und 42 werden mittels eines Brückenelements 44 miteinander verbunden. Die Messzelle 30' kann sowohl einteilig als auch mehrteilig ausgebildet sein. Bei der Ausgestaltung gemäß der Figur 2A ist ein mehrteiliger Aufbau gezeigt.

In sich gegenüberliegenden Stirnflächen 46 und 48 der Hantelköpfe 40 bzw. 42 sind entsprechende Aussparungen 50 (vgl. auch Figur 2C) dargestellt, die zur Aufnahme des plättchenförmigen Brückenelements 44 geeignet sind.

Das plättchenförmige Element 44 ist in Figur 2B in Draufsicht schematisch dargestellt. In einem mittleren Bereich 52 des Brückenelements 44 ist ein Kraftmesssensor 54 angeordnet. Der Kraftmesssensor 54 wird hier durch zwei Folien-DMS 56 und 58 realisiert. Aus Gründen der Redundanz sind zwei DMS vorgesehen. Ein DMS (Vollbrücke) würde jedoch ausreichen.

Der mehrteilige Aufbau der Messzelle 30' hat den Vorteil, dass das plättchenförmige Brückenelement 44 nicht nur mit Folien-DMS 56 und 58 beklebt werden kann, sondern dass auch Sputter-Techniken angewendet werden können. Die Fläche des plättchenförmigen Brückenelements 44 ist ausreichend groß, um einen Ionenstrahl bei der Sputter-Technik präzise führen zu können, damit eine homogene Verteilung auf der Oberfläche erzielt wird, die bei einer einstückig ausgebildeten Messzelle nicht erreichbar wäre, da unter Umständen die Hantelköpfe 40 und 42 im Weg wären. Alternativ könnten gesputterte Zellen auch aufgeschweißt werden.

Zurückkehrend zur Figur 2A können die Hantelköpfe 40 und 42 zusätzlich auch mit Rillen bzw. Vertiefungen 60 versehen sein, die sich in Umfangsrichtung 24 erstrecken. Die Rillen 60 dienen u.a. zur Aufnahme von O-Ringen 62. Ferner kann Klebstoff in die Rillen 60 eingefügt werden, um die Messzelle 30' mit dem Achskörper 12 zu verkleben. Auf diese Weise erhält man eine sichere Fixierung der Messzelle 30' im Achskörper 12. Die O-Ringe 62 dichten dann die Messzelle gegenüber der Außenwelt ab. Die Messzelle ist dann vor äußeren Einflüssen geschützt.

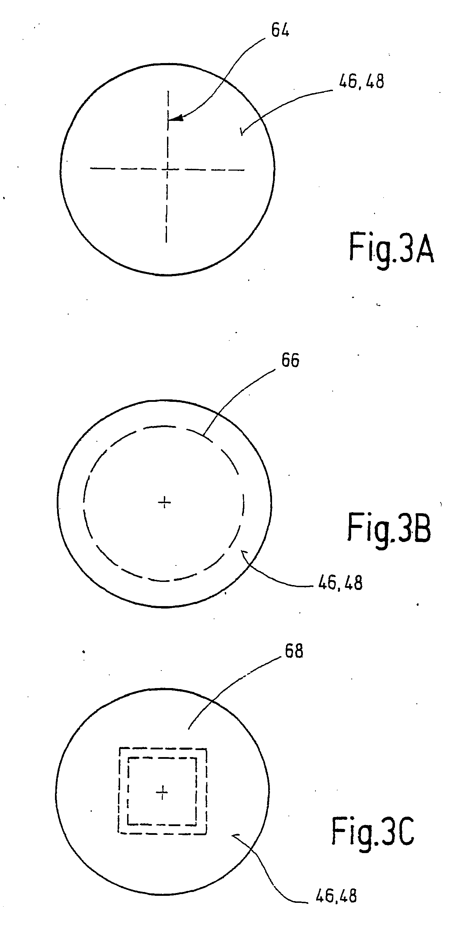

In den Figuren 3A bis 3C sind weitere Querschnittsformen für das Brückenelement 44 gezeigt. So zeigt Figur 3A einen kreuzförmigen Querschnitt, Figur 3B einen (massiven) kreisförmigen Querschnitt und Figur 3C einen vierkantförmigen Querschnitt, der innen hohl ist. Die Kraftmesssensorik lässt sich an den jeweiligen Außenflächen anbringen.

Die massive zylindrische Form des Brückenelements 44 der Figur 3B hat sich insbesondere bei der Messung von Scherkräften als vorteilhaft herausgestellt.

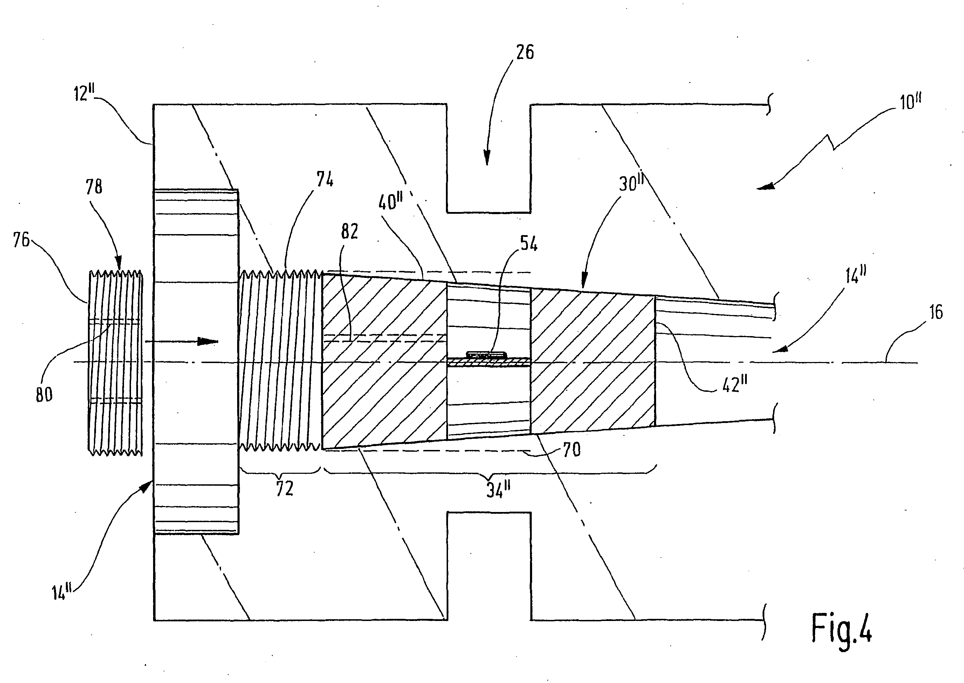

Figur 4 zeigt eine weitere Möglichkeit, wie eine Messzelle 30" gemäß der vorliegenden Erfindung zuverlässig mit einem Achskörper 12" verbunden werden kann.

Figur 4 zeigt eine Schnittansicht entlang der Längsachse 16. Die Messzelle 30" ist in die axiale Bohrung 14" eingeführt. Die axiale Bohrung 14" ist im Messzellenabschnitt 34" konisch ausgebildet. Um dies besser grafisch darstellbar machen zu können, ist eine Hilfslinie 70 eingezeichnet, die den "normalen" Verlauf einer zylindrischen Axialbohrung zeigt (vgl. Figur 1).

Damit die Messzelle 30" in die axiale Bohrung 14" einführbar ist, sind die Hantelköpfe 40" und 42" ebenfalls entsprechend konisch ausgebildet.

An den Messzellenabschnitt 34 der axialen Bohrung 14" schließt sich ein Gewindeabschnitt 72 mit einem Gewinde 74 an. Der Gewindeabschnitt 72 dient zur Aufnahme eines Sperrkörpers 76, der außenumfänglich ebenfalls mit einem entsprechenden Gewinde 78 versehen ist.

Mit Hilfe des Sperrkörpers 76 lässt sich die Messzelle 30" auf einfache Weise ins Innere der axialen Bohrung 14 pressen. Ferner ist die Messzelle 30" gegen ein Herausfallen gesichert.

Um die Verdrahtung einer Kraftmesssensorik 54 durchführen zu können, weisen sowohl der Sperrkörper 76 als auch die Messzelle 30" vorzugsweise entsprechende Durchführungen 80 bzw. 82 auf.

Es versteht sich, dass man die Messzelle auch auf andere Art und Weise mit dem Achskörper verbinden kann. Die Messzelle könnte beispielsweise auch mit dem Achskörper verschweißt werden. Der Sperrkörper wäre dann überflüssig. Die Schweißnaht würde die Messzelle sichern.

Ferner kann das erfindungsgemäße modulare Kraftaufnehmersystem auch Anwendung bei Kraftmessdosen bzw. -ringen, Messlaschen und ähnlichen Kraftmesssystemen finden.

## Patentansprüche

1. Modulares Kraftaufnehmersystem (10) zum Messen von Kräften (20), die im Wesentlichen quer auf eine Achse (16), insbesondere eine Messachse, wirken, mit:
- einem Achskörper (12), der sich entlang einer Längsachse (16) erstreckt, wobei der Achskörper (12) einen Krafteinleitungsabschnitt (18), mindestens einen Lagerabschnitt (28) und mindestens einen Verformungsabschnitt (22) aufweist, und
- einer Messzelle (30), die einen Messzellenkörper (32) umfasst,
**dadurch gekennzeichnet, dass**
- die Messzelle (30) mit ihrem Messzellenkörper (32) derart in eine axiale Bohrung (14) des Achskörpers (12) einführbar ist, dass die Messzelle (30) im Wesentlichen formschlüssig im Inneren des Achskörpers (12) angeordnet werden kann, wobei
- die axiale Bohrung (14) einen Abschnitt (34") umfasst, der zur Aufnahme der Messzelle (30") bestimmt ist und konisch ausgebildet ist.

2. Modulares Kraftaufnehmersystem nach Anspruch 1, **dadurch gekennzeichnet, dass** der Achskörper (12) den Messzellenkörper (32) im eingeführten Zustand in Umfangsrichtung (24) relativ zur Längsachse (16) umgibt.

3. Modulares Kraftaufnehmersystem nach Anspruch 1 oder 2, **dadurch gekennzeichnet, dass** die axiale Bohrung (14) konzentrisch zur Längsachse (16) angeordnet ist.

4. Modulares Kraftaufnehmersystem nach einem der Ansprüche 1 bis 3, **dadurch gekennzeichnet, dass** die axiale Bohrung (14) im Bereich des Verformungsabschnitts (22) liegt.

5. Modulares Kraftaufnehmersystem nach einem der Ansprüche 1 bis 4, **dadurch gekennzeichnet, dass** die axiale Bohrung (14) durch den Achskörper (12) hindurch läuft.

6. Modulares Kraftaufnehmersystem nach einem der Ansprüche 1 bis 5, **dadurch gekennzeichnet, dass** die axiale Bohrung (14) axiale Abschnitte (34, 36) mit unterschiedlichen Durchmessern aufweist.

7. Modulares Kraftaufnehmersystem nach Anspruch 1, **dadurch gekennzeichnet, dass** die axiale Bohrung (14) einen weiteren, mit einem Gewinde (74) versehenen Abschnitt (72) aufweist, um in einem Zustand, wenn die Messzelle (30") in den konischen Abschnitt eingeführt ist, einen mit einem entsprechenden Gewinde versehenen Sperrkörper (76) von außen derart dort einschrauben zu können, dass die Messzelle (30") im Wesentlichen flächenbündig im konischen Abschnitt (34") verklemmt ist.

8. Modulares Kraftaufnehmersystem nach einem der Ansprüche 1 bis 7, **dadurch gekennzeichnet, dass** die Messzelle (30) hantelförmig ausgebildet ist.

9. Modulares Kraftaufnehmersystem nach Anspruch 8, **dadurch gekennzeichnet, dass** der Messzellenkörper zwei Hantelköpfe (40, 42) und ein Brückenelement (44) umfasst, wobei das Brückenelement (44) die Hantelköpfe (40, 42) in axialer Richtung verbindet.

10. Modulares Kraftaufnehmersystem nach Anspruch 9, **dadurch gekennzeichnet, dass** der Messzellenkörper (32) einstückig ausgebildet ist.

11. Modulares Kraftaufnehmersystem nach Anspruch 9, **dadurch gekennzeichnet, dass** die Hantelköpfe (40, 42) und das Brückenelement (44) modular ausgebildet sind.

12. Modulares Kraftaufnehmersystem nach Anspruch 11, **dadurch gekennzeichnet, dass** sich gegenüberliegende Stirnflächen (46, 48) der Hantelköpfe (40, 42) jeweils eine Aussparung (50) zur formschlüssigen Aufnahme des Brückenelements (44) aufweisen.

13. Modulares Kraftaufnehmersystem nach einem der Ansprüche 9 bis 12, **dadurch gekennzeichnet, dass** das Brückenelement (44) plättchenförmig ausgebildet ist.

14. Modulares Kraftaufnehmersystem nach einem der Ansprüche 9 bis 12, **dadurch gekennzeichnet, dass** das Brückenelement (44) einen kreuzförmigen Querschnitt (64) aufweist.

15. Modulares Kraftaufnehmersystem nach einem der Ansprüche 9 bis 12, **dadurch gekennzeichnet, dass** das Brückenelement (44) vierkantförmig (68) und innen hohl ausgebildet ist.

16. Modulares Kraftaufnehmersystem nach einem der Ansprüche 9 bis 12, **dadurch gekennzeichnet, dass** das Brückenelement (44) zylinderförmig (66) ausgebildet ist.

17. Modulares Kraftaufnehmersystem nach einem der Ansprüche 1 bis 16, **dadurch gekennzeichnet, dass** zwei Messzellen (30) vorgesehen sind, von denen jede in eine axiale Bohrung (14) einführbar ist,

18. Modulares Kraftaufnehmersystem nach Anspruch 17, **dadurch gekennzeichnet, dass** zwei axiale Bohrungen (14) vorgesehen sind, die sich entlang der Längsachse (16) gegenüberliegen.

19. Modulares Kraftaufnehmersystem nach Anspruch 16, **dadurch gekennzeichnet, dass** mindestens zwei, in gleicher Richtung orientierte, axiale Bohrungen (14) vorgesehen sind, die gegenüber der Längsachse (16) versetzt sind.

## Claims

1. A modular force transducer (10) for measuring forces (20) which substantially act transversally on a shaft (16), particularly a measuring shaft, comprising:
- a shaft body (12) extending along a longitudinal axis (16), wherein the shaft body (12) comprises a force introduction section (18), at least one bearing section (28) and at least one deformation section (22), and
- a measuring cell (30) comprising a measuring cell body (32),
**characterized in that**
- the measuring cell (30) is introducible with its measuring cell body (30) into an axial bore (14) of the shaft body (12) so that the measuring cell (30) can be arranged in the interior of the shaft body (12) substantially in a form-closed manner, wherein
- the axial bore (14) comprises a section (34") adapted for receiving the measuring cell (30") and being formed conically.

2. The modular force transducer system of claim 1, **characterized in that** the shaft body (12) in an introduced state surrounds the measuring cell body (32) in a circumferential direction (34) relative to the longitudinal axis (16).

3. The modular force transducer system of claim 1 or 2, **characterized in that** the axial bore (14) is arranged concentrically relative to the longitudinal axis (16).

4. The modular force transducer system of any of the claims 1 to 3, **characterized in that** the axial bore (14) is arranged in the region of the deformation section (22).

5. The modular force transducer system of any of the claims 1 to 4, **characterized in that** the axial bore (14) extends through the shaft body (12).

6. The modular force transducer system of any of the claims 1 to 5, **characterized in that** the axial bore (14) comprises axial sections (34, 36) having different diameters.

7. The modular force transducer system of claim 1, **characterized in that** the axial bore (14) comprises a further section (72) comprising a thread (74), allowing, in a state in which the measuring cell (30") is introduced into the conical section, a stop body (76) being provided with a corresponding thread to be screwed-in there from the outside so that the measuring body (30") is substantially jammed in the conical section (34") in a area-flushed manner.

8. The modular force transducer system of any of the claims 1 to 7, **characterized in that** the measuring cell (30) is formed in a dumbbell shape.

9. The modular force transducer system of claim 8, **characterized in that** the measuring cell body comprises two dumbbell heads (40, 42) and a bridge element (44), wherein the bridge element (44) connects the dumbbell heads (40, 42) axially.

10. The modular force transducer system of claim 9, **characterized in that** the measuring cell body (32) is formed integrally.

11. The modular force transducer system of claim 9, **characterized in that** the dumbbell heads (40, 42) and the bridge element (44) are formed in a modular manner.

12. The modular force transducer system of claim 11, **characterized in that** opposite end faces (46, 48) of the dumbbell heads (40, 42) respectively comprise a recess (50) for receiving the bridge element (44) in a form-closed manner.

13. The modular force transducer system of any of the claims 9 to 12, **characterized in that** the bridge element (44) is formed as a small plate.

14. The modular force transducer system of any of the claims 9 to 12, **characterized in that** the bridge element (44) comprises a cross-shaped cross section (64).

15. The modular force transducer system of any of the claims 9 to 12, **characterized in that** the bridge element (44) is timber-shaped and internally hollow.

16. The modular force transducer system of any of the claims 9 to 12, **characterized in that** the bridge element (44) is formed cylindrically.

17. The modular force transducer system of any of the claims 1 to 16, **characterized in that** two measuring cells (30) are provided, each of which is introducible into one axial bore (14).

18. The modular force transducer system of claim 17, **characterized in that** two axial bores (14) are provided which are arranged oppositely along the longitudinal axis (16).

19. The modular force transducer system of claim 16, **characterized in that** at least two axial bores (14) are provided which are orientated along the same direction and displaced relative to the longitudinal axis (16).

## Revendications

1. Système d'enregistrement de force modulaire (10) pour mesurer des forces (20) qui agissent essentiellement transversalement sur un axe (16), notamment un axe de mesure, comprenant :
un corps d'axe (12) qui s'étend le long d'un axe longitudinal (16), le corps d'axe (12) présentant une portion d'introduction de force (18), au moins une portion de palier (28) et au moins une portion de déformation (22), et
une cellule de mesure (30) qui comprend un corps de cellule de mesure (32),
**caractérisé en ce que**
la cellule de mesure (30) peut être introduite avec son corps de cellule de mesure (32) dans un alésage axial (14) du corps d'axe (12) de telle sorte que la cellule de mesure (30) puisse être disposée essentiellement par engagement par coopération de forme à l'intérieur du corps d'axe (12),
l'alésage axial (14) comprenant une portion (34") qui est prévue pour recevoir la cellule de mesure (30") et qui est réalisée sous forme conique.

2. Système d'enregistrement de force modulaire selon la revendication 1, **caractérisé en ce que** le corps d'axe (12) entoure le corps de cellule de mesure (32) dans l'état introduit dans la direction périphérique (24) par rapport à l'axe longitudinal (16).

3. Système d'enregistrement de force modulaire selon la revendication 1 ou 2, **caractérisé en ce que** l'alésage axial (14) est disposé concentriquement à l'axe longitudinal (16).

4. Système d'enregistrement de force modulaire selon l'une quelconque des revendications 1 à 3, **caractérisé en ce que** l'alésage axial (14) est situé dans la région de la portion de déformation (22).

5. Système d'enregistrement de force modulaire selon l'une quelconque des revendications 1 à 4, **caractérisé en ce que** l'alésage axial (14) passe à travers le corps d'axe (12).

6. Système d'enregistrement de force modulaire selon l'une quelconque des revendications 1 à 5, **caractérisé en ce que** l'alésage axial (14) présente des portions axiales (34, 36) ayant des diamètres différents.

7. Système d'enregistrement de force modulaire selon la revendication 1, **caractérisé en ce que** l'alésage axial (14) présente une autre portion (72) pourvue d'un filetage (74), afin de pouvoir y visser depuis l'extérieur, dans un état dans lequel la cellule de mesure (30") est introduit dans la portion conique, un corps de verrouillage (76) pourvu d'un filetage correspondant, de telle sorte que la cellule de mesure (30") soit essentiellement bloquée en affleurement en surface dans la portion conique (34").

8. Système d'enregistrement de force modulaire selon l'une quelconque des revendications 1 à 7, **caractérisé en ce que** la cellule de mesure (30) est réalisée sous forme d'haltère.

9. Système d'enregistrement de force modulaire selon la revendication 8, **caractérisé en ce que** le corps de cellule de mesure comprend deux têtes d'haltère (40, 42) et un élément de pont (44), l'élément de pont (44) reliant les têtes d'haltère (40, 42) dans la direction axiale.

10. Système d'enregistrement de force modulaire selon la revendication 9, **caractérisé en ce que** le corps de cellule de mesure (32) est réalisé d'une seule pièce.

11. Système d'enregistrement de force modulaire selon la revendication 9, **caractérisé en ce que** les têtes d'haltère (40, 42) et l'élément de pont (44) sont réalisés de manière modulaire.

12. Système d'enregistrement de force modulaire selon la revendication 11, **caractérisé en ce que** des faces frontales opposées (46, 48) des têtes d'haltère (40, 42) présentent à chaque fois un évidement (50) pour recevoir par engagement par correspondance géométrique l'élément de pont (44).

13. Système d'enregistrement de force modulaire selon l'une quelconque des revendications 9 à 12, **caractérisé en ce que** l'élément de pont (44) est réalisé sous forme de plaquette.

14. Système d'enregistrement de force modulaire selon l'une quelconque des revendications 9 à 12, **caractérisé en ce que** l'élément de pont (44) présente une section transversale cruciforme.

15. Système d'enregistrement de force modulaire selon l'une quelconque des revendications 9 à 12, **caractérisé en ce que** l'élément de pont (44) est réalisé sous forme carrée (68) et avec un intérieur creux.

16. Système d'enregistrement de force modulaire selon l'une quelconque des revendications 9 à 12, **caractérisé en ce que** l'élément de pont (44) est réalisé sous forme cylindrique (66).

17. Système d'enregistrement de force modulaire selon l'une quelconque des revendications 1 à 16, **caractérisé en ce que** deux cellules de mesure (30) sont prévues, dont chacune peut être introduite dans un alésage axial (14).

18. Système d'enregistrement de force modulaire selon la revendication 17, **caractérisé en ce que** deux alésages axiaux (14) sont prévus, lesquels sont opposés le long de l'axe longitudinal (16).

19. Système d'enregistrement de force modulaire selon la revendication 16, **caractérisé en ce qu'**au moins deux alésages axiaux (14) orientés dans la même direction sont prévus et sont décalés par rapport à l'axe longitudinal (16).
